# FASCICULE DE BREVET EUROPEEN

(11) **EP 3 240 919 B1**
(45) Date de publication et mention de la délivrance du brevet: **19.06.2019**
(21) Numéro de dépôt: 15817471.4
(22) Date de dépôt: 04.12.2015
(51) Int. Cl.: C25C 3/12, C04B 26/26, C04B 111/00, B01F 13/10

(54) **PROCÉDÉ D'ÉLABORATION D'UNE PÂTE CARBONÉE POUR LA FABRICATION D'ÉLECTRODES A HAUTE DENSITÉ**
VERFAHREN ZUR HERSTELLUNG EINER KOHLENSTOFFPASTE ZUR HERSTELLUNG VON HOCHDICHTEN ELEKTRODEN
PROCESS FOR PRODUCING A CARBON PASTE FOR THE MANUFACTURE OF HIGH-DENSITY ELECTRODES

(30) Priorité: 30.12.2014 FR 1463422
(43) Date de publication de la demande: 08.11.2017
(73) Titulaire: Fives Solios, 78230 Le Pecq (FR)
(72) Inventeur: BELBACHIR, Salima, 69702 Givors (FR); ANDRE, Jean-François, 69702 Givors (FR); BOUCHE, Christophe, 69702 Givors (FR); FELIX, Olivier, 69702 Givors (FR); GONZALEZ, Christian, 69702 Givors (FR); PINONCELY, André, 69702 Givors (FR); SOMNARD, Bertrand, 69702 Givors (FR)
(74) Mandataire: Cabinet Plasseraud
(86) Numéro de dépôt international: PCT/FR2015/053319
(87) Numéro de publication internationale: WO 2016/107998

(56) Documents cités:
- WO-A1-03/018275
- WO-A1-2011/064461
- FR-A- 992 508
- FR-A- 1 073 696

## Description

### 1. DOMAINE D'APPLICATION

La présente invention concerne un procédé d'élaboration d'une pâte carbonée pour la fabrication d'électrodes à haute densité, et plus précisément un procédé de malaxage séquencé pour l'obtention d'une pâte carbonée, destinée à la fabrication d'électrodes à haute densité, et notamment d'anodes destinées à l'électrolyse de l'aluminium, ainsi que des moyens de mise en oeuvre dudit procédé.

### 2. ETAT DE L'ART

Il est connu, notamment par FR 992 508 et FR 1073 696, que les électrodes en carbone, et notamment les anodes pour l'électrolyse de l'aluminium, sont fabriquées à partir d'une pâte constituée par mélange, dans des proportions bien définies, d'une part, d'un mélange granulaire carboné, solide et sec, de distribution granulométrique connue et contrôlée, et contenant à la fois des granulats pouvant atteindre 10 à 30 mm, ainsi qu'une certaine proportion de fines submillimétriques, plus généralement de dimension inférieure à 100 µm (typiquement ces fines contiennent en poids de 18 à 22 % de fines < 74 microns et de 12 à 18 % de fines < 32 microns dans le cas particulier de la fabrication des anodes pour l'électrolyse de l'aluminium) et, d'autre part, d'un liant bitumineux liquide, le terme liant bitumineux désignant à la fois les résidus hydrocarbonés lourds issus de la filière pétrolière, et ceux issus de la filière charbon, et plus particulièrement les brais de houille, ou encore ceux issus des filières bio-sourcées.

L'utilisation d'un liant bitumineux liquide nécessite une mise en oeuvre à une température supérieure à son point de ramollissement (désigné ci-après par l'acronyme SP issu de « Softening Point » en anglais), lequel peut être caractérisé par différentes méthodes normalisées, celle utilisée en référence dans le présent mémoire descriptif étant la méthode Mettler ISO 5940-2. Afin d'abaisser suffisamment la viscosité du liant, d'une part, pour des besoins de pompage et d'écoulement, d'autre part, pour favoriser ses propriétés d' « enrobage » et de « pénétration » telles que décrites ci-après, la température de mise en oeuvre doit être typiquement d'au moins 30°C au dessus du SP obtenu par la méthode Mettler, et se situe plus généralement au moins 60 à 70°C au-dessus de ce SP, voire 90°C au-dessus du SP dans certaines applications les plus récentes dans le domaine de la fabrication des anodes pour l'électrolyse de l'aluminium.

Le liant bitumineux est donc soit délivré froid sous forme solide puis fondu sur le lieu d'utilisation, soit délivré directement chaud sous forme liquide. Dans un cas comme dans l'autre, un stock tampon est constitué dans des réservoirs réchauffés isothermes, qui maintiennent le liant au voisinage de sa température d'utilisation finale.

Comme représenté schématiquement sur la figure la, l'obtention d'une pâte homogène est donc assurée par une étape de préchauffage du mélange granulaire 1, alimentant le préchauffeur 101, afin que le liant ne fige pas immédiatement en surface froide des granulats, suivie d'une étape de mélange et de malaxage, dans le malaxeur 102, du mélange granulaire préchauffé 2, sortant du préchauffeur 101, avec le liant bitumineux liquide 3, alimentant également le malaxeur 102. En sortie du malaxeur 102, on obtient une pâte carbonée 5 alimentant le formage, assuré dans une presse ou un vibro-compacteur 104, délivrant des blocs d'électrodes 6 en sortie de formage.

On désigne par homogénéité de la pâte, une distribution homogène du liant, d'une part, autour des granulats du mélange granulaire, ce qui est défini comme la propriété d'« enrobage » du liant, et dans les vides intergranulaires, ce que l'on définit comme la propriété de « garnissage » du liant, et, d'autre part, par un remplissage maximal et uniformément réparti des porosités ouvertes des granulats du mélange granulaire et que l'on définit par la propriété de « pénétration » du liant. Ces deux propriétés contribuent ensemble à améliorer la densité des électrodes, ce paramètre apparaissant comme le critère qualité clef, car directement corrélé à la conductivité électrique et à la durabilité des électrodes dans le processus électrolytique.

L'étape de malaxage peut être réalisée :
- en discontinu, à l'aide de malaxeurs à arbres horizontaux, dont l'un des plus connus est le malaxeur à « bras en Z », ou encore de malaxeurs à cuve rotative horizontale ou inclinée, dans laquelle un outil de mélange et malaxage tourne à la manière d'un pétrin, avec, dans l'un comme l'autre cas, une alimentation du liant bitumineux sur la charge de mélange granulaire sec préchauffé,
- ou en continu, à l'aide d'un malaxeur tubulaire à vis horizontale dont le déplacement axial alternatif est superposé au mouvement de rotation de la vis, et dans lequel sont introduits, à une extrémité de la vis, le mélange granulaire préchauffé, puis le liant bitumineux, et le mélange subit une multitude de cycles de cisaillement entre des couteaux de la vis et du corps de l'appareil, au cours de sa progression avant d'être déchargé à l'extrémité opposée de l'appareil, ou encore d'un malaxeur à cuve rotative inclinée, dans laquelle un outil de mélange et malaxage tourne à la manière d'un pétrin, et dans laquelle le liant bitumineux est déposé sur le mélange en cours de préparation, en aval du point d'introduction du mélange granulaire sec.

Dans certaines applications récentes en procédé continu, comme la fabrication d'anodes pour l'aluminium depuis les années 1990, une dernière étape de refroidissement de la pâte par injection d'eau dans un ultime malaxeur-refroidisseur permet de dissocier la température de malaxage de la température de mise en forme (« formage ») des électrodes dans l'étape aval. Il est dès lors possible de malaxer plus chaud que la température maximale de formage généralement définie par la température de début de fluage de l'électrode au démoulage, et ainsi bénéficier de la plus faible viscosité du liant bitumineux pour favoriser sa pénétration dans les porosités ouvertes des granulats. Dans la production d'anodes pour l'électrolyse de l'aluminium, la température de malaxage peut ainsi être réglée à environ 25 à 30 °C au-dessus de la température de formage. Malheureusement, l'injection d'eau et sa vaporisation au contact de la pâte carbonée chaude génèrent une volatilisation importante des composés organiques légers du liant bitumineux, lesquels doivent ensuite être captés et traités pour préserver l'environnement.

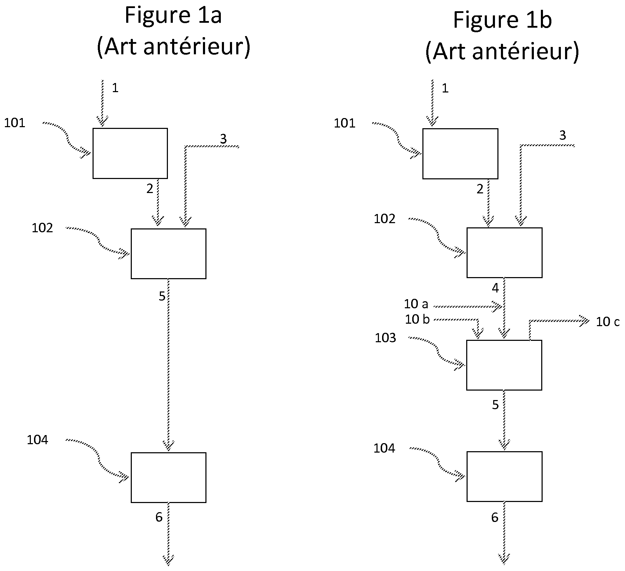

La figure 1b représente schématiquement ce procédé, qui reprend les mêmes étapes que le procédé de la figure la jusqu'au malaxeur 102. A la sortie du malaxeur 102, la pâte carbonée 4 alimentant le malaxeur-refroidisseur 103 peut être refroidie par une injection d'eau 10a dans la gaine de liaison du malaxeur 102 au malaxeur-refroidisseur 103, d'où s'échappe de la vapeur d'eau de refroidissement 10c chargée en vapeurs d'hydrocarbures. En variante, l'injection d'eau 10b est effectuée directement dans le malaxeur-refroidisseur 103. En sortie du malaxeur-refroidisseur 103, la pâte carbonée 5 alimente ensuite le formage, assuré, comme dans le procédé de la figure la, par la presse ou le vibro-compacteur 104, qui délivre des blocs d'électrodes 6 en sortie de formage.

Plus récemment, la demande de brevet WO2011/064461 décrit un nouveau concept de malaxeur continu à axe horizontal décrit comme capable d'assurer en un seul appareil à la fois l'étape de malaxage et l'étape de refroidissement de la pâte carbonée.

Il est important de noter que cette étape de malaxage, dans les procédés discontinus ou continus décrits ci-dessus, ainsi que dans leurs différents modes de mise en oeuvre, concerne toujours la totalité du mélange granulaire, sans traitement différencié de telle ou telle fraction granulométrique, et qu'elle met en oeuvre une seule qualité de liant et la totalité du liant requis au final pour la fabrication des électrodes. De même il faut noter que, jusqu'à présent, l'ordre d'introduction des matières premières dans le malaxeur est toujours le même afin d'éviter le tapissage des parois du malaxeur avec du liant : d'abord le mélange granulaire en un seul flux, puis le liant bitumineux liquide également en un seul flux.

Par ailleurs, il est noté que, dans l'étape de malaxage-refroidissement telle que connue à ce jour, la composition de la pâte ne subit aucune modification significative hormis son refroidissement et le dégazage partiel des composés organiques légers, et notamment qu'il n'y a ni ajout de produits secs, ni ajout complémentaire de liant.

Pour maintenir sensiblement le même taux de pénétration du liant sans avoir à malaxer à haute température puis à refroidir la pâte par injection d'eau, mais en se contentant de malaxer au voisinage de la température de formage, on pourrait envisager d'utiliser un liant bitumineux à plus bas SP (typiquement SP=80 à 90°C au lieu de SP=110 à 115°C utilisé couramment à ce jour, dans le cas de la fabrication des anodes pour l'électrolyse de l'aluminium), la courbe de viscosité de ce liant en fonction de la température se translatant sur l'axe des températures sensiblement de la même valeur que la variation du SP. Néanmoins l'abaissement du SP est généralement synonyme d'une distillation moins poussée des goudrons d'hydrocarbures bruts et d'une teneur accrue en huiles intermédiaires dans le liant bitumineux. Or ces huiles présentent en général un rapport molaire C/H plus faible que les longues molécules composant la fraction lourde du liant. La présence de ces huiles dans le liant dégrade donc le taux de cokéfaction (Coking Value en anglais) du liant lors de la cuisson des électrodes, et génère de nouvelles microporosités, voire des microfissures, lors du dégazage des composés hydrogénés en phase de préchauffage du processus de cuisson, et conduisant in fine à dégrader la densité finale de l'électrode, donc ses performances de conductivité électrique et de durabilité, ce qui bien sûr n'est pas souhaitable.
FR 992 508 décrit un procédé d'élaboration d'une pâte carbonée pour la fabrication d'électrodes pour l'électrolyse de l'aluminium, par malaxage d'un mélange granulaire solide et sec et d'un liant bitumineux liquide, en quantité requise pour la fabrication des électrodes, le mélange granulaire solide et sec étant un mélange de deux fractions de constituants, dont l'une est une fraction dite grossière, incluant des granulats, et l'autre fraction est une fraction de fines submillimétriques, et comprenant au moins deux étapes de malaxage consécutives, dont une première étape de malaxage, dite de pré-imprégnation des granulats, consiste à malaxer ladite fraction dite grossière du mélange granulaire avec une partie dudit liant bitumineux, en quantité au moins suffisante pour enrober les granulats et combler au moins partiellement des porosités ouvertes desdits granulats, et est suivie d'une deuxième étape de malaxage, dite de garnissage, qui consiste à malaxer ladite fraction grossière pré-imprégnée de liant bitumineux et issue de la première étape de malaxage, avec le solde dudit liant bitumineux, requis pour la fabrication des électrodes, et avec ladite fraction de fines dudit mélange granulaire.

### 3. PROBLEME TECHNIQUE A RESOUDRE

La qualité d'une électrode en carbone se juge avant tout par une faible résistivité électrique ainsi qu'une durée de vie maximale. Ces deux critères sont essentiellement dépendants de la densification de l'électrode lors de son processus de fabrication, et plus particulièrement des vides intergranulaires résiduels et des porosités ouvertes non comblées par le liant. En effet, les uns comme les autres sont autant de freins à la conductivité électrique de l'électrode et de voies d'accès, à coeur de l'électrode, de composés externes nocifs à sa durée de vie, tels que l'oxygène de l'air, le dioxyde de carbone, les sels acides électrolytiques, etc.... Donc, l'objectif de la préparation de la pâte, de sa mise en forme et de la cuisson des électrodes est l'obtention d'anodes cuites ayant une porosité interne quasinulle, quantifiée par une densité maximale.

Il existe un ensemble de moyens d'actions concourant à maximiser la densité finale d'une électrode :
- sélectionner un matériau carboné le plus dense possible pour la préparation du mélange granulaire sec : la disponibilité de ces matériaux n'est pas toujours possible en quantité suffisante et à un coût raisonnable, d'autant que la tendance globale mondiale est à une dégradation de qualité des sources d'approvisionnement, essentiellement en conséquence de la dégradation de qualité des hydrocarbures bruts, généralement d'origine pétrolière, dont ils sont issus ; cette piste d'amélioration semble donc condamnée à terme et, au contraire, constitue une contrainte supplémentaire pour les procédés de fabrication d'électrodes carbonées, qui devront à l'avenir être de plus en plus tolérants à une dégradation qualitative des matières premières ;
- réaliser cette préparation du mélange granulaire sec selon un procédé qui délivre une recette granulométrique optimale en broyant préférentiellement les granulats fragilisés par des porosités internes ou des microfissures, par exemple au moyen de broyeurs opérant par compression d'un lit de matière tel que préconisé dans le document de brevet WO 2001/38253, ou encore au moyen de séparateurs densimétriques tels que préconisés dans le document de brevet WO 2008/083472, **lesquels sont** d'ores et déjà industrialisés et n'offrent plus à ce jour de perspective d'amélioration complémentaire ;
- optimiser la quantité de liant bitumineux à injecter lors du malaxage de la pâte de sorte à ce qu'elle soit suffisante pour l'enrobage du mélange granulaire sec, et pour le remplissage des porosités ouvertes des granulats et des vides intergranulaires, sans toutefois conduire à un ressuage du liant en fin de formage d'une électrode par compactage, ressuage qui est source de problèmes de collage lors de la cuisson de cette électrode : les systèmes de contrôle modernes permettent aujourd'hui une automatisation en ligne de cette optimisation de dosage du liant qui ne constitue donc plus en soi une piste d'amélioration ;
- assurer un enrobage et garnissage optimal des granulats par le liant bitumineux et maximiser la pénétration du liant bitumineux dans les porosités ouvertes des granulats lors du malaxage de la pâte carbonée en perfectionnant le procédé connu par FR 992 508 : c'est là l'objet principal de l'invention proposée, dont la problématique est décrite plus avant dans ce mémoire descriptif;
- puis maximiser le degré de compactage de cette pâte carbonée dans la machine de formage des électrodes : cette voie a été le principal axe de développement de ces dernières décennies, et les machines de formage actuelles (presses hydrauliques ou vibro-compacteurs) fonctionnent généralement sous vide avec des cycles et des efforts optimisés qui leur confèrent déjà des performances exceptionnelles et laissent entrevoir peu d'amélioration significative dans ce domaine ;
- enfin atteindre ces objectifs en minimisant la perte en poids, donc en densité, de l'électrode lors de la cuisson, perte en poids qui est générée par la volatilisation des composés hydrogénés du liant bitumineux en préambule à sa cokéfaction, laquelle volatilisation donne naissance à de nouvelles microporosités ; ceci peut être atteint :
   ∘ d'une part, en minimisant le % de liant requis dans la préparation de la pâte en se limitant à celui nécessaire pour des taux d'enrobage, de garnissage et de pénétration maximum, ce qui est déjà fait par les exploitants, notamment pour éviter tout ressuage de liant lors du compactage générant des problèmes de collage lors de la cuisson ;
   ∘ d'autre part, en recourant à des liants bitumineux à fort ratio molaire C/H, donc épuisés en huiles intermédiaires par distillation fractionnée poussée, voire suivi d'un réformage, et présentant donc un SP le plus haut possible (typiquement SP=130 °C minimum, voire 150 à 170°C, au lieu des SP=110 à 115 °C utilisés couramment aujourd'hui dans le cas de la fabrication des anodes pour l'électrolyse de l'aluminium) ; toutefois l'utilisation de liant à haut SP, sans dégrader les qualités d'enrobage, garnissage et pénétration, nécessite de fonctionner à des températures plus élevées sur l'ensemble de la chaîne de manutention, stockage et mise en oeuvre du liant, et se heurte aujourd'hui à des seuils technologiques qui restent encore à franchir, notamment au niveau des équipements de malaxage ; malgré tout, si ces seuils technologiques venaient à être surmontés, l'utilisation de ces liants à haut SP amènerait à des gains de densité des électrodes après cuisson, du fait du plus fort ratio C/H de ces liants, mais sans amélioration significative de la densité des électrodes « crues » (avant cuisson), puisque la viscosité de ces liants serait sensiblement équivalente à celle des liants actuels, donc sans amélioration significative des propriétés d'enrobage, garnissage et pénétration ; la problématique de base resterait inchangée et l'intérêt de l'invention telle que proposée demeure donc entier.

Les observations microscopiques sous lumières polarisées réalisées par le Déposant dans le cadre de ses programmes de recherche sur des pâtes carbonées issues de divers malaxeurs ont clairement mis en évidence qu'un bon enrobage homogène des granulats par le liant bitumineux et un bon remplissage des vides intergranulaires résiduels en fin de compactage restent imparfaits dans les procédés connus à ce jour, bien que la quantité de liant bitumineux liquide introduite au malaxeur soit suffisante, voire en léger excès, pour couvrir la surface développée des granulats et remplir les vides intergranulaires résiduels en fin de compactage, et bien que l'appareillage de malaxage assure un brassage intensif du mélange sans phénomène de by-passage de l'un ou l'autre des constituants.

La pénétration du liant au sein des porosités ouvertes des granulats est une opération plus complexe et plus difficile à mettre en oeuvre de façon homogène, car elle requiert à la fois que le liant ait un accès libre à ces porosités et que ses caractéristiques rhéologiques lui confèrent des propriétés de mouillabilité suffisantes.

En théorie, si on obtenait un bon enrobage homogène des granulats, l'accès du liant aux porosités ouvertes serait potentiellement optimal. Néanmoins, la présence des fines du mélange granulaire sec est de nature à bloquer au moins partiellement l'accès du liant à ces porosités ouvertes. De même, la présence de grosses molécules dans le liant (telles que les mésophases dans les brais de houille issues de la coalescence de molécules lourdes, notamment lors des opérations de réformage, ou encore telles que les paraffines dans les liant bitumineux d'origine pétrolière) sont également de nature à obstruer au moins partiellement l'accès aux porosités ouvertes et à freiner la pénétration du liant par capillarité.

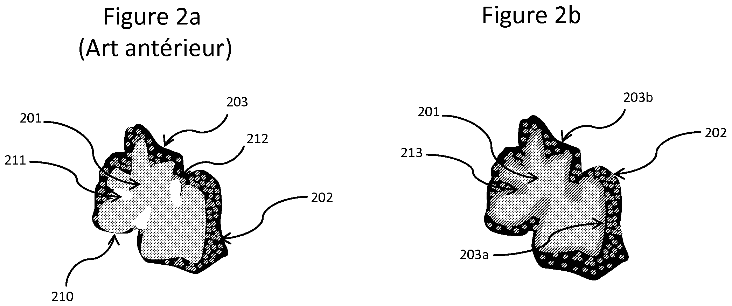

La figure 2a représente schématiquement un granulat 201 enrobé de liant bitumineux 203 et de fines 202, avec une zone 210 non correctement enrobée, des porosités ouvertes non remplies de liant telles que la porosité 211, et des fines et/ou macro-molécules 212 bloquant l'accès à une porosité ouverte du granulat 201, comme cela est obtenu par la mise en oeuvre des procédés de l'état de la technique.

Enfin, quand bien même le liant aurait un total libre accès aux porosités ouvertes, encore faut-il qu'il puisse y progresser essentiellement par capillarité et remplir au maximum les vides correspondants. Il a été largement établi dans la littérature que la vitesse de progression par capillarité est directement liée à l'aptitude du liant à mouiller la surface des granulats, laquelle est elle-même directement dépendante de la viscosité du liant, toutes choses égales par ailleurs. Or, comme déjà mentionné plus haut, la viscosité des liants bitumineux à une température opératoire donnée est directement fonction de leur SP. Ainsi, pour l'illustration de ces propos, dans le cas particulier de la fabrication d'anodes pour l'électrolyse de l'aluminium :
- un brai de houille à SP 130°C aura sensiblement la même viscosité et, par voie de conséquence, la même vitesse de pénétration par capillarité qu'un brai de houille à SP 110°C à condition d'augmenter la température de malaxage de l'écart entre les SP, soit ici + 20°C, et inversement, un brai à SP 90°C pourra être malaxé 20°C plus bas que le brai à SP 110°C sans modification sensible de la vitesse de pénétration dans les porosités ouvertes ;
- la même hauteur de pénétration par capillarité dans une porosité de diamètre donné sera atteinte après plusieurs dizaines d'heures (donc jamais atteinte dans les procédés industriels de l'Etat de l'Art) si l'on reste à seulement quelques 10 ou 20°C au dessus du SP, donc avec une très forte viscosité du liant, alors que quelques minutes suffiront si on opère à plus de 80 à 90°C au-dessus du SP avec un liant très fluide.

Là encore, les observations microscopiques sous lumière polarisée réalisées par le Déposant dans le cadre de ses programmes de recherche sur des pâtes carbonées issues de divers malaxeurs ont clairement mis en évidence que cette double problématique d'accessibilité du liant aux porosités ouvertes et de sa vitesse de progression par capillarité, est aujourd'hui un frein à la densification maximale des électrodes, bon nombre de porosités ouvertes demeurant vides ou que partiellement remplies. Cette double problématique subsiste même dans le cas de la fabrication de blocs cathodiques pour l'industrie de l'aluminium, ou d'électrodes pour les applications électrométallurgiques, où les blocs carbonés préformés sont cuits une première fois, puis ré-imprégnés (généralement sous vide) de liant bitumineux avant une deuxième étape de cuisson. En effet la ré-imprégnation sous vide n'est souvent que partielle et ne permet pas d'accéder à l'ensemble des porosités ouvertes situées à coeur des blocs carbonés.

La présente invention propose un procédé susceptible de lever ce frein et de repousser plus avant la limite de densification des électrodes.

### 4. DESCRIPTION DE L'INVENTION

L'invention a pour objet un procédé d'élaboration d'une pâte carbonée pour la fabrication d'électrodes à haute densité, par malaxage d'un mélange granulaire solide et sec et d'un liant bitumineux liquide, du type connu par FR 992 508 et comprenant au moins deux étapes de malaxage consécutives tel que présenté ci-dessus et qui se caractérise en ce que le liant bitumineux utilisé dans la première étape de malaxage est d'une qualité différente de celle du liant bitumineux utilisé dans la seconde étape de malaxage, et en ce qu'on utilise, lors de la première étape de malaxage, un liant bitumineux à point de ramollissement plus bas que le point de ramollissement du liant bitumineux utilisé lors de la deuxième étape de malaxage.

Avantageusement, le procédé de l'invention peut aussi présenter une ou plusieurs des caractéristiques suivantes :
- dans la deuxième étape de malaxage, l'introduction du solde de liant bitumineux intervient simultanément à ou après l'introduction de la fraction grossière pré-imprégnée issue de la première étape de malaxage, et l'introduction de la fraction de fines intervient simultanément ou après l'introduction du solde de liant bitumineux;
- les fines du mélange granulaire sec sont pré-mélangées avec tout ou partie dudit solde de liant bitumineux, avant introduction du pré-mélange ainsi obtenu dans la deuxième étape de malaxage ;
- les qualités des deux liants bitumineux à points de ramollissement différents sont obtenues par des opérations de distillation fractionnée puis fluxage à partir d'une unique qualité de liant bitumineux approvisionné pour l'élaboration de la pâte.

L'invention a aussi pour objet une installation de mise en oeuvre du procédé de l'invention tel que présenté ci-dessus, et qui comprend deux étages de malaxeur, en mode continu ou discontinu, dont le premier étage de malaxeur, destiné à la mise en oeuvre de la première étape du procédé, présente au moins une entrée apte à recevoir un flux granulaire solide et sec de granulats et un flux de liant bitumineux liquide, ainsi qu'une sortie apte à délivrer un mélange pâteux résultant de la première étape de malaxage, et dont le deuxième étage de malaxeur, destiné à la mise en oeuvre de la deuxième étape de malaxage, dite de garnissage, comporte une entrée, apte à recevoir ledit mélange pâteux issu du premier étage de malaxeur, ainsi qu'au moins une autre entrée apte à recevoir un flux granulaire solide et sec de fines et un flux d'appoint de liant bitumineux, le deuxième étage de malaxeur présentant également une sortie apte à délivrer la pâte élaborée, propre au formage des électrodes, et l'installation est apte à stocker deux liants de qualités différentes chacun dans l'un respectivement de deux dispositifs avec réservoir de stockage et boucle d'alimentation respectivement du premier étage de malaxeur et du deuxième étage de malaxeur, ainsi qu'avec un dispositif de dosage de chacune des deux qualités de liant bitumineux alimentant respectivement le premier étage de malaxeur et le deuxième étage de malaxeur.

Avantageusement, l'installation de l'invention peut aussi présenter une ou plusieurs des caractéristiques suivantes :
elle comprend, de plus, un dispositif de préchauffage séparé de la fraction de granulats et de la fraction de fines du mélange granulaire sec, ainsi que des équipements de manutention séparés, dont l'un est apte à assurer l'alimentation de la fraction de granulats dans le premier étage de malaxeur et l'autre l'alimentation de la fraction de fines dans le deuxième étage de malaxeur; et
elle comporte, de plus, au moins une unité de distillation fractionnée, apte à produire deux liants bitumineux de qualités différentes à partir d'un même liant bitumineux de qualité intermédiaire.

### 5. PRESENTATION DES FIGURES

D'autres caractéristiques et avantages de l'invention ressortiront de la description donnée ci-dessous, à titre non limitatif, d'exemples de réalisation, en référence aux figures annexées, sur lesquelles les mêmes références numériques désignent des éléments identiques ou analogues et se correspondant. Sur ces dessins :
- les figures 1a et 1b représentent schématiquement et respectivement deux procédés de préparation de pâte carbonée connus de l'art antérieur, déjà décrits ci-dessus dans la présentation générale de l'état de la technique ;
- la figure 2a, déjà décrite ci-dessus, représente schématiquement un granulat enrobé de liant et de fines, tel qu'obtenu par la mise en oeuvre des procédés de l'art antérieur ;
- la figure 2b est une représentation analogue à la figure 2a d'un granulat avec du liant bitumineux de pré-enrobage et de pénétration dans les porosités ouvertes du granulat, suite au premier étage de malaxage, ainsi que du liant bitumineux de garnissage, suite au deuxième étage de malaxage, selon le procédé de l'invention ;
- les figures 3a et 3b sont deux vues schématiques, analogues aux figures la et 1b, et représentant respectivement deux modes de mise en oeuvre du procédé selon l'invention et des installations correspondantes.

### 6. MISE EN ŒUVRE DE L'INVENTION

La présente invention repose sur l'observation que la grande majorité des porosités ouvertes accessibles au liant se concentre dans la fraction grossière du mélange granulométrique sec, les fines présentant une porosité beaucoup plus faible et de taille plus petite du fait que ces fines sont essentiellement issues de phénomènes d'attrition ou broyage dans des étapes en amont du procédé de l'invention.

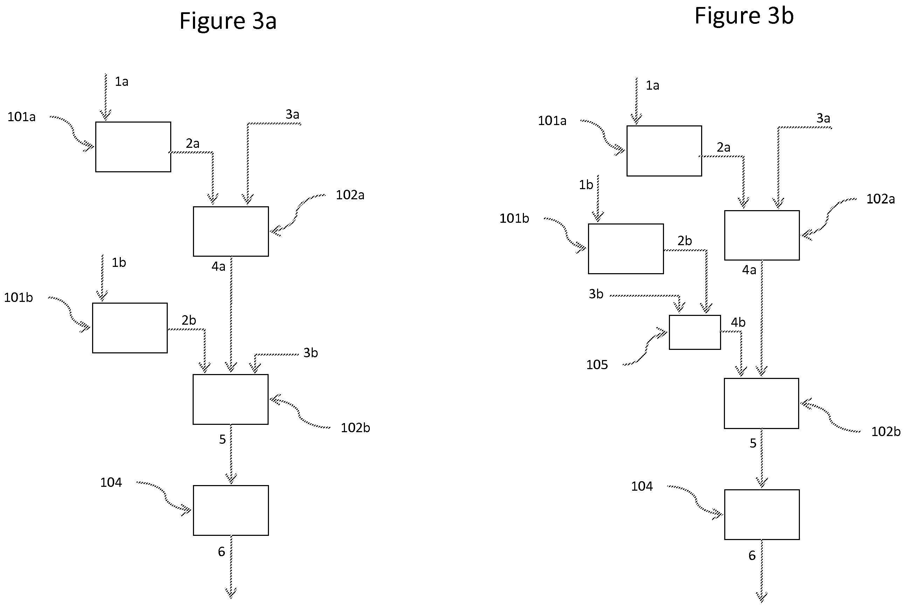

Selon l'invention, il est proposé de décomposer l'étape de malaxage de l'état de la technique en deux étapes propres à l'invention, ainsi qu'illustré en Figure 3a.

Une première étape de malaxage, dite de « pré-imprégnation », ne concerne que la fraction granulométrique grossière du mélange granulaire sec, à l'exception des fines. Cette fraction grossière la est tout d'abord alimentée dans un préchauffeur 101a, d'où elle sort à l'état préchauffé 2a, pour être alimentée dans un premier étage de malaxage 102a, dans lequel cette fraction grossière préchauffée 2a est malaxée avec une partie 3a seulement du liant bitumineux requis pour la fabrication des électrodes, et également alimentée dans le premier étage de malaxage 102a. Cette première étape de malaxage vise à favoriser l'accès et la pénétration du liant bitumineux dans les porosités de la fraction grossière du mélange granulaire sec, en l'absence des fines du mélange granulaire sec, ce qui facilite la distribution du liant autour des granulats et améliore l'enrobage homogène de ceux-ci. Cette première étape est alimentée selon le même principe que les malaxeurs de l'Art Antérieur, à savoir que la partie 3a de liant bitumineux est introduite dans le premier étage de malaxage 102a simultanément à ou après la fraction granulaire grossière préchauffée 2a, de façon à éviter le tapissage des parois du malaxeur par le liant.

Une seconde étape de malaxage, dite de « garnissage », est une étape dans laquelle on vient ajouter au produit sortant de la première étape, le solde du mélange granulaire sec, c'est-à-dire la fraction de fines (les fines ou ultrafines), ainsi que le complément de liant requis pour la fabrication des électrodes. A cet effet, la fraction grossière 4a pré-enrobée de liant bitumineux et en sortie du premier étage de malaxage 102a, est alimentée dans un second étage de malaxage 102b, également alimenté, d'une part, avec la fraction fine préchauffée 2b sortant d'un second préchauffeur 101b, alimenté de la fraction fine 1b, et, d'autre part, avec le solde requis 3b du liant bitumineux. Cette seconde étape de malaxage vise essentiellement à enrober de façon homogène l'ensemble du mélange granulaire, et notamment les fines qui développent la plus grande surface spécifique, et à distribuer ces fines enrobées de la façon la plus homogène possible entre les granulats pré-imprégnés et pré-enrobés, pour combler le mieux possible les vides intergranulaires, comme représenté schématiquement sur la figure 2b. Sur cette figure 2b, un granulat 201 est représenté enrobé de liant bitumineux de pré-enrobage 203a, ayant de plus rempli les porosités ouvertes du granulat 201, comme représenté pour la porosité 213, par l'effet de la première étape de malaxage, et cette couche de liant de pré-enrobage 203a est elle-même enveloppée par du liant bitumineux de garnissage 203b, alimenté au second étage de malaxage 102b, et dans lequel les fines 202, également alimentées à ce second étage de malaxage 102b, sont distribuées de manière sensiblement homogène.

Dans cette deuxième étape de malaxage, afin d'éviter l' « assèchement » de la pâte 4a issue de la première étape au moment de l'addition des fines préchauffées 2b, avec le pic de puissance et les risques inhérents de bourrage du malaxeur, on veille à ce que le solde requis 3b de liant bitumineux soit introduit simultanément à ou après la pâte 4a issue de la première étape de malaxage, mais simultanément au ou avant le solde de mélange granulaire sec, c'est-à-dire la fraction fine préchauffée 2b sortant du second préchauffeur 101b d'un dispositif de préchauffage séparé des fractions grossière et fine, qui comprend aussi le premier préchauffeur 101a de la fraction grossière, ce qui constitue sur plusieurs points une nouveauté par rapport à l'Art Antérieur.

Ensuite, la pâte carbonée 5 en sortie du second étage de malaxage 102b est prête pour alimenter le formage, qui s'effectue, comme précédemment, dans une presse ou un vibro-compacteur 104, d'où sortent des blocs d'électrodes 6 prêtes à être cuites.

La répartition du liant 3a, 3b à injecter à chacune des deux étapes de malaxage peut être calculée :
- soit de sorte que le produit en sortie de chaque étape contienne la même teneur pondérale en liant que celle visée dans la pâte finale 5 pour produire l'électrode crue ;
- soit, à minima, en injectant à la première étape la quantité de liant 3a juste nécessaire pour enrober les granulats et combler leurs porosités ouvertes, et en injectant le reste du liant 3b dans la deuxième étape de sorte à obtenir la teneur pondérale visée dans la pâte finale 5 pour produire l'électrode crue ; la fraction de liant 3a requise pour enrober les granulats à la première étape est évaluée au prorata de la surface des granulats à enrober par rapport à la surface développée par l'ensemble du mélange granulaire sec ;
- soit encore toute autre répartition intermédiaire aux deux précédentes et telle que choisie arbitrairement.

Un exemple de mise en oeuvre de l'invention est décrit ci-dessous à partir des données de base suivantes :
- Débit de production : 50 tonnes par heure (t/h) de pâte
- Teneur en liant dans l'électrode crue : 15% en poids, soit 7,5 t/h de liant et 42,5 t/h de mélange granulaire sec
- Composition du mélange granulaire sec :
   ∘ Surface spécifique Blaine du mélange granulaire sec: 3500 cm2/g
   ∘ 80% de fraction grossière soit 34 t/h
   ∘ 20% de fraction fine soit 8,5 t/h,
- Caractéristiques de la fraction grossière :
   ∘ Surface spécifique Blaine de la fraction grossière seule: environ 350 cm2/g
   ∘ Masse volumique : 2.0 kg/dm3,
   ∘ % volumique de porosités ouvertes : estimé à 10%,
- Masse volumique du liant : 1.3 kg/dm3

### Résultats :

- A iso-teneur pondérale en liant en sortie des deux étapes :
   ∘ débit de pâte en sortie de première étape : 42.5*0.80/(1-0.15) = 40 t/h
   ∘ débit de liant à injecter en première étape : 40*0.15 = 6.0 t/h
   ∘ débit de liant à injecter en deuxième étape : 7.5-6,0 = 1.5 t/h
- A minima:
   ∘ Débit de liant à injecter en première étape pour l'enrobage de la fraction grossière : 7.5*(350*40)/(3500*42.5) = 0.7 t/h
   ∘ Débit de liant requis en première étape pour combler les porosités ouvertes : (42,5*0.80/2.0)*0.10*1.3 = 2.2 t/h
   ∘ Débit total de liant à injecter en première étape : 0.7+2.2 = 2.9 t/h
   ∘ Débit de liant à injecter en deuxième étape : 7.5-2.9 = 4.6 t/h
- Choix intermédiaire :
   ∘ Exemple : distribution égale 50/50 entre les deux étapes
   ∘ Débit de liant à injecter à chaque étape : 7.5/2 = 3.75 t/h

L'ajout de la fraction de fines 2b et de l'appoint de liant bitumineux 3b dans la deuxième étape peut se faire de deux façons différentes : soit, pour chacun d'eux, indépendamment et directement dans l'appareillage de malaxage assurant la mise en oeuvre de la seconde étape de malaxage 102a (voir figure 3a), soit au contraire simultanément en un seul flux, après une étape préalable de pré-mélange qui a pour objectif d'améliorer la dispersion des fines 202 dans le liant de garnissage 203b, et ultérieurement d'assurer leur distribution plus homogène autour des granulats 201 pré-imprégnés issus de la première étape de malaxage 102a, comme représenté sur la figure 3b.

Le procédé selon la figure 3b se distingue de celui selon la figure 3a en ce que la fraction fine préchauffée 2b, en sortie du préchauffeur 101b, et le solde requis de liant bitumineux 3b alimentent directement un pré-mélangeur 105, et que la pâte 4b résultant de ce pré-mélange, en sortie du pré-mélangeur 105, est alimentée, comme la pâte 4a en sortie du premier étage de malaxage 102a, dans le second étage de malaxage 102b, en sortie duquel est obtenue la pâte carbonée 5 alimentant le formage 104, comme dans les conditions précédentes, pour obtenir des blocs moulés d'électrodes 6.

Une évolution proposée de ce procédé de base consiste à différencier la qualité des liants ajoutés à chacune des étapes pour tenir compte des objectifs spécifiques de chacune d'elles :
- Ainsi, en première étape ou étape de pré-imprégnation, l'objectif est essentiellement d'assurer le bon enrobage des granulats 201 et le bon remplissage de leurs porosités ouvertes 213. On vise donc à utiliser un liant le plus fluide possible, mais également à rester si possible au voisinage de la température de formage de l'électrode, pour éviter une étape complémentaire de refroidissement de la pâte génératrice d'émissions de composés aromatiques légers. Pour cela, on choisit donc plutôt un liant à faible SP, typiquement dont le SP est inférieur d'au moins 50°C, préférablement de 80°C, à la température de formage (exemple : pour une température de formage de 160 à 170°C, un liant avec un SP de 80 à 90°C conviendra).
- En deuxième étape ou étape de garnissage, l'objectif est d'enrober les granulats 201 et de combler les vides intergranulaires avec les fines 202, elles-mêmes correctement enrobées par le liant de garnissage 203b et distribuées de façon homogène, mais sans qu'il y ait besoin d'imprégnation de porosités ouvertes, puisque les granulats 201 sont déjà pré-imprégnés et que les fines 202 sont par nature très peu poreuses. Comme indiqué précédemment, cette étape requiert peu de puissance spécifique dès lors que l'on se trouve à au moins 30°C au-dessus du SP du liant. On peut donc choisir un liant à plus haut SP qui respecte cette condition au voisinage de la température de formage (exemple : pour une température de formage de 160 à 170°C, un liant avec un SP de 130 à 140°C conviendra). L'intérêt de choisir un liant à haut SP pour cette deuxième étape réside dans la nécessité de compenser le choix d'un liant à bas SP pour la première étape dite de pré-imprégnation, afin de maintenir autant que possible le taux de cokéfaction du mélange des liants et, au final, de ne pas reperdre, lors de la cuisson des électrodes 6, le gain de densité obtenu par une meilleure imprégnation des granulats 201.

Sur la figure 2b, le liant bitumineux 203a de pré-enrobage et pénétration dans les porosités ouvertes 213 est le liant à bas SP, si deux qualités différentes de liant sont utilisées, ou cas de deux liants à SP différents, tandis que le liant bitumineux de garnissage 203b est le liant à haut SP.

A ce stade, cela suppose donc que l'exploitant s'approvisionne en deux qualités différentes de liant, avec des infrastructures de stockage dédiées, ce qui peut représenter une contrainte majeure. Aussi, pour lever cette contrainte, une autre évolution proposée pour ce procédé permet aux exploitants de mettre en oeuvre l'invention sans modifier la logistique d'approvisionnement actuelle et en limitant l'impact sur les infrastructures de stockage au seul ajout d'un second réservoir journalier : Il s'agit en fait d'insérer, entre le stock principal et les réservoirs journaliers, une petite unité de distillation fractionnée capable de produire un liant à haut SP 203b à partir d'une fraction du liant brut à SP moyen. Les huiles légères récupérées lors de cette opération sont alors fluxées avec la fraction restante du liant brut à SP moyen pour produire le liant à bas SP 203a. Ainsi, par exemple, à partir d'un liant à SP 110°C, et avec l'hypothèse d'une répartition 50/50 du liant entre les deux étapes, on peut envisager d'obtenir de cette façon, un liant à SP 130°C 203b et un liant à SP 90°C 203a. Cette opération permet d'obtenir deux qualités de liant 203a, 203b pour la mise en oeuvre de l'invention, sans créer de nouvelle contrainte d'approvisionnement pour l'exploitant, et sans flux résiduel à retraiter.

La mise en oeuvre du procédé de l'invention, avec une seule qualité de liant ou deux qualités de liant différentes, est facilement réalisable en associant 2 étages de malaxeurs conventionnels, aussi bien en mode discontinu qu'en mode continu et s'apparente en ce cas à l'Etat de l'Art avec malaxeur-refroidisseur 103 (voir figure 1b). Les quelques différences opératoires pour ces équipements par rapport à l'Etat de l'Art ne requièrent que des modifications mineures :
- Le premier étage 102a de malaxeur, destiné à la mise en oeuvre de la première étape dite de pré-imprégnation, fonctionne soit aux environs de la température de malaxage de l'Etat de l'Art actuel dans le cas où une seule qualité de liant est utilisée, soit aux environs de la température de formage (et non jusqu'à 30°C au-dessus) dans le cas où deux qualités différentes de liant sont utilisées et où le liant à bas SP 203a est injecté en 3a dans ce premier étage 102a de malaxage. Par ailleurs ce premier étage 102a accepte, en entrée, un flux granulaire et un flux de liant liquide comme dans l'Etat de l'Art actuel, pour produire, en sortie, une pâte plus grenue et donc moins collante que dans le procédé conventionnel : l'ensemble des conditions opératoires évolue plutôt dans un sens très favorable.
- Le second étage 102b de malaxeur, destiné à la mise en oeuvre de la deuxième étape dite de garnissage, fonctionne aux environs de la température de formage, à l'instar d'un malaxeur-refroidisseur de l'état de la technique, mais reçoit en entrée, d'une part, la pâte granulaire 4a déchargée du premier étage 102a, et, d'autre part, les fines 2b et l'appoint de liant 3b, qui est le liant à haut SP si deux qualités de liant sont utilisées, de préférence préalablement mélangés ensemble en 105, en lieu et place de l'injection d'eau de refroidissement dans le malaxeur-refroidisseur précité de l'état de la technique, pour sortir au final une pâte 5 plus dense mais quasiment à la même température que la pâte selon l'état de la technique.

Alternativement, la mise en oeuvre du procédé de l'invention peut s'envisager avec un seul équipement de malaxage, avec l'avantage évident de cette solution en termes d'implantation et de coût d'investissement :
- soit par malaxage discontinu, avec introduction séquentielle des matériaux telle que décrite ci-dessus et propre à l'invention, de sorte à faire se succéder, dans le cycle de l'appareil, une phase de pré-imprégnation (102a) des granulats (2a) par le liant à bas SP (3a), suivie d'une phase de garnissage (102b) de ces granulats pré-imprégnés (4a) par l'ajout du liant à haut SP (3b) puis des fines (2b), ou alternativement par l'ajout des fines et du liant à haut SP (3b) pré-mélangés (en 105) ;
- soit par malaxage continu, qui intègre une introduction séquentielle des matériaux dans le malaxeur telle que décrite ci-dessus et propre à l'invention, de sorte à créer au sein du malaxeur, une zone amont dite de pré-imprégnation des granulats (2a) par le liant à bas SP (3a), suivie d'une zone aval dite de garnissage de ces granulats pré-imprégnés par le liant à haut SP (3b) puis des fines (2b), ou alternativement par l'ajout des fines (2b) et du liant à haut SP (3b) pré-mélangés.
   ∘ Ainsi, par exemple, on peut envisager d'introduire les granulats (2a) à l'extrémité amont d'un malaxeur tubulaire horizontal, suivis immédiatement après par l'introduction du liant à bas SP (3a), puis, après une longueur suffisante pour la pré-imprégnation des granulats, typiquement à mi-longueur de la zone de malaxage, introduire le liant à haut SP (3b) suivi immédiatement de l'introduction des fines (2b), la pâte carbonée finale (5) étant déchargée en extrémité aval du malaxeur horizontal après une longueur suffisante pour le garnissage homogène des granulats par le mélange de fine (2b) et liant à haut SP (3b). Alternativement, on peut introduire, à mi-longueur du malaxeur, directement le mélange de fines (2b) et liant à haut SP (3b).
   ∘ De même on peut envisager, par exemple, l'utilisation d'un malaxeur continu, tel que décrit dans le document de brevet WO2011/064461, dans lequel la zone amont est modifiée pour être divisée en deux zones : en amont, une zone de pré-imprégnation alimentée par les granulats (2a) et le liant à bas SP (3a), puis un dispositif d'alimentation en succession du liant à haut SP (3b) puis des fines (2b), ou, alternativement, d'un mélange de ces deux derniers, suivi d'une zone aval de garnissage, la zone de refroidissement de la pâte telle que décrite dans le document de brevet WO2011/064461 étant supprimée. Dans cette configuration, le galet presseur ainsi que le dispositif de désagglomération et le volet de répartition équipent toute la longueur utile de l'appareil.
   ∘ Ou encore toute autre configuration de malaxeur, qui autorise l'introduction séquentielle des matériaux telle que décrite dans l'invention, de sorte à ménager une zone de pré-imprégnation des granulats suivie d'une zone de garnissage.

Quoiqu'il en soit, la mise en oeuvre de l'invention indifféremment avec un seul malaxeur ou deux malaxeurs en série, nécessite de modifier aussi la partie amont de l'installation de traitement conventionnelle afin d'y intégrer les équipements complémentaires requis pour l'alimentation du nouveau procédé, à savoir:
- Un préchauffage séparé (101a, 101b) des granulats (1a) et des fines (1b) du mélange granulaire sec, ainsi que des équipements de manutention séparés jusqu'à leur point d'injection dans l'un ou l'autre des malaxeurs ;
- Optionnellement, pour l'utilisation de liants de qualités différentes en zone et étape de pré-imprégnation et en zone et étape de garnissage :
   ∘ soit, dans le cas d'approvisionnements séparés des deux qualités de liant, un deuxième réservoir de stockage pour recevoir les livraisons de la deuxième qualité de liant, avec ses propres dispositifs de réchauffage, chargement et déchargement ;
   ∘ soit, dans le cas où l'on maintient un seul approvisionnement d'une qualité intermédiaire de liant, une unité de production des deux qualités de liant à partir du stockage unique existant ;
   ∘ dans les deux cas, un deuxième réservoir de stockage journalier, avec boucle d'alimentation et de dosage de la deuxième qualité de liant;
- Optionnellement, un réservoir agité de pré-mélange (105) des fines (2b) et du liant à haut SP (3b) avec système d'extraction/dosage spécifique, pour l'alimentation directe de ce pré-mélange à l'entrée de la zone de garnissage.

## Revendications

1. Procédé d'élaboration d'une pâte carbonée (5) pour la fabrication d'électrodes (6) à haute densité, par malaxage d'un mélange granulaire solide et sec (1a, 1b) et d'un liant bitumineux liquide (3a, 3b), en quantité requise pour la fabrication des électrodes (6), le mélange granulaire solide et sec étant un mélange de deux fractions de constituants, dont l'une est une fraction dite grossière (1a ; 2a), Incluant des granulats, et l'autre fraction est une fraction de fines submillimétriques (1b, 2b), comprenant au moins deux étapes de malaxage consécutives, dont une première étape de malaxage (102a), dite de pré-imprégnation des granulats, consiste à malaxer ladite fraction grossière (2a) du mélange granulaire avec une partie (3a) dudit liant bitumineux, en quantité au moins suffisante pour enrober les granulats et combler au moins partiellement des porosités ouvertes desdits granulats, et est suivie d'une deuxième étape de malaxage (102b), dite de garnissage, qui consiste à malaxer ladite fraction grossière pré-imprégnée (4a) de liant bitumineux et issue de la première étape de malaxage (102a), avec le solde (3b) dudit liant bitumineux, requis pour la fabrication des électrodes (6), et avec ladite fraction de fines (2b) dudit mélange granulaire, **caractérisé en ce que** le liant bitumineux (3a) utilisé dans la première étape de malaxage (102a) est d'une qualité différente de celle du liant bitumineux (3b) utilisé dans la seconde étape de malaxage (102b), et **en ce qu'**on utilise, lors de la première étape de malaxage (102a), un liant bitumineux (3a) à point de ramollissement plus bas que le point de ramollissement du liant bitumineux (3b) utilisé lors de la deuxième étape de malaxage (102b).

2. Procédé selon la revendication 1, **caractérisé en ce que**, dans la deuxième étape de malaxage (102b), l'introduction du solde (3b) de liant bitumineux intervient simultanément à ou après l'introduction de la fraction grossière pré-imprégnée (4a) issue de la première étape de malaxage (102a), et **en ce que** l'introduction de la fraction de fines (2b) intervient simultanément ou après l'introduction du solde (3b) de liant bitumineux.

3. Procédé selon l'une quelconque des revendications 1 et 2, **caractérisé par le fait que** les fines (2b) du mélange granulaire sec sont pré-mélangées (105) avec tout ou partie dudit solde (3b) de liant bitumineux, puis le pré-mélange (4b) ainsi obtenu est Introduit dans la deuxième étape de malaxage (102b).

4. Procédé selon l'une quelconque des revendications 1 à 3, **caractérisé en ce que** les qualités des deux liants bitumineux (3a, 3b) à points de ramollissement différents sont obtenues par des opérations de distillation fractionnée puis fluxage à partir d'une unique qualité de liant bitumineux approvisionné pour l'élaboration de la pâte (5).

5. Installation de mise en oeuvre du procédé selon l'une quelconque des revendications 1 à 4, **caractérisée en ce qu'**elle comprend deux étages de malaxeur, en mode continu ou discontinu, dont le premier étage de malaxeur (102a), destiné à la mise en oeuvre de la première étape du procédé, présente au moins une entrée apte à recevoir un flux granulaire solide et sec de granulats (2a) et un flux de liant bitumineux liquide (3a), ainsi qu'une sortie apte à délivrer un mélange pâteux (4a) résultant de la première étape de malaxage, et dont le deuxième étage de malaxeur (102b), destiné à la mise en oeuvre de la deuxième étape de malaxage, dite de garnissage, comporte une entrée, apte à recevoir ledit mélange pâteux (4a) issu du premier étage de malaxeur (102a), ainsi qu'au moins une autre entrée apte à recevoir un flux granulaire solide et sec de fines (2b) et un flux d'appoint (3b) de liant bitumineux, le deuxième étage de malaxeur (102b) présentant également une sortie apte à délivrer la pâte (5) élaborée, propre au formage des électrodes (6), et **en ce qu'**elle est apte à stocker deux liants de qualités différentes chacun dans l'un respectivement de deux dispositifs avec réservoir de stockage et boucle d'alimentation respectivement du premier étage de malaxeur (102a) et du deuxième étage de malaxeur (102b), ainsi qu'avec un dispositif de dosage de chacune des deux qualités de liant bitumineux (3a, 3b) alimentant respectivement le premier étage de malaxeur (102a) et le deuxième étage de malaxeur (102b).

6. Installation selon la revendication 5, **caractérisée en ce qu'**elle comprend, de plus, un dispositif (101a, 101b) de préchauffage séparé de la fraction de granulats (1a) et de la fraction de fines (1b) du mélange granulaire sec, ainsi que des équipements de manutention séparés, dont un est apte à assurer l'alimentation de la fraction de granulats dans le premier étage de malaxeur (102a) et un autre l'alimentation de la fraction de fines dans le deuxième étage de malaxeur (102b).

7. Installation selon l'une quelconque des revendications 5 et 6, **caractérisée en ce qu'**elle comporte, de plus, au moins une unité de distillation fractionnée, apte à produire deux liants bitumineux (3a, 3b) de qualités différentes à partir d'un même liant bitumineux de qualité intermédiaire.

## Patentansprüche

1. Verfahren zur Herstellung einer kohlenstoffhaltigen Paste (5) zur Erzeugung von Elektroden (6) mit hoher Dichte, durch Mischen einer festen und trockenen granulären Mischung (1a, 1b) und eines flüssigen bituminösen Bindemittels (3a, 3b), in einer erforderlichen Menge zur Erzeugung von Elektroden (6), wobei die feste und trockene granuläre Mischung eine Mischung von zwei Bestandteilfraktionen ist, von denen die eine eine als grob bezeichnete Fraktion (1a; 2a) ist, die Granulate umfasst, und die andere Fraktion eine Fraktion von Submillimeter-Feinstoffen (1b, 2b) ist, umfassend mindestens zwei konsekutive Mischschritte, von denen ein erster Mischschritt (102a), der als Vorimprägnieren der Granulate bezeichnet wird, daraus besteht, dass die grobe Fraktion (2a) der granulären Mischung mit einem Teil (3a) des bituminösen Bindemittels in einer Menge gemischt wird, die mindestens für die Umhüllung der Granulate und für das mindestens teilweise Füllen der offenen Porositäten der Granulate ausreichend ist, und von einem zweiten Mischschritt (102b) gefolgt wird, der als Packen bezeichnet wird, und der daraus besteht, die vorimprägnierte grobe Fraktion (4a) des bituminösen Bindemittels aus dem ersten Mischschritt (102a) mit dem Rest (3b) des bituminösen Bindemittels, das für die Erzeugung von Elektroden (6) erforderlich ist, und mit der Feinstofffraktion (2b) der granulären Mischung zu mischen, **dadurch gekennzeichnet, dass** das bituminöse Bindemittel (3a), das in dem ersten Mischschritt (102a) verwendet wird, eine andere Qualität aufweist als jene des bituminösen Bindemittels (3b), das in dem zweiten Mischschritt (102b) verwendet wird, und dadurch, dass in dem ersten Mischschritt (102a) ein bituminöses Bindemittel (3a) mit einem niedrigeren Erweichungspunkt als dem Erweichungspunkt des bituminösen Bindemittels (3b) verwendet wird, das in dem zweiten Mischschritt (102b) verwendet wird.

2. Verfahren nach Anspruch 1, **dadurch gekennzeichnet, dass** in dem zweiten Mischschritt (102b) das Einbringen des Rests (3b) des bituminösen Bindemittels gleichzeitig mit oder nach dem Einbringen der vorimprägnierten groben Fraktion (4a) aus dem ersten Mischschritt (102a) erfolgt, und dadurch, dass das Einbringen der Feinstofffraktion (2b) gleichzeitig mit oder nach dem Einbringen des Rests (3b) des bituminösen Bindemittels erfolgt.

3. Verfahren nach einem der Ansprüche 1 und 2, **dadurch gekennzeichnet, dass** die Feinstoffe (2b) der trockenen granulären Mischung mit dem gesamten oder einem Teil des Rests (3b) des bituminösen Bindemittels vorgemischt werden (105), und dann die so erhaltene Vormischung (4b) in den zweiten Mischschritt (102b) eingebracht wird.

4. Verfahren nach einem der Ansprüche 1 bis 3, **dadurch gekennzeichnet, dass** die Qualitäten der beiden bituminösen Bindemittel (3a, 3b) mit verschiedenen Erweichungspunkten durch Vorgänge einer fraktionierten Destillation und anschließend eines Fluxens aus einer einzigen Qualität des bituminösen Bindemittels erhalten werden, die für die Herstellung der Paste (5) bereitgestellt wird.

5. Anlage zur Durchführung des Verfahrens nach einem der Ansprüche 1 bis 4, **dadurch gekennzeichnet, dass** diese zwei Mischerstufen umfasst, im kontinuierlichen oder diskontinuierlichen Modus, von denen die erste Mischerstufe (102a), die für die Durchführung des ersten Schritts des Verfahrens bestimmt ist, mindestens einen Eingang, der geeignet ist, einen festen und trockenen granulären Strom von Granulaten (2a) und einen Strom eines flüssigen bituminösen Bindemittels (3a) aufzunehmen, und einen Ausgang, der geeignet ist, eine pastenförmige Mischung (4a) zu liefern, die aus dem ersten Mischschritt stammt, aufweist, und von denen die zweite Mischerstufe (102b), die für die Durchführung des zweiten Mischschritts bestimmt ist, der als Packen bezeichnet wird, einen Eingang, der geeignet ist, die pastenförmige Mischung (4a) aus der ersten Mischerstufe (102a) aufzunehmen, und mindestens einen anderen Eingang, der geeignet ist, einen festen und trockenen granulären Strom von Feinstoffen (2b) und einen ergänzenden Strom (3b) eines bituminösen Bindemittels aufzunehmen, aufweist, wobei die zweite Mischerstufe (102b) auch einen Ausgang aufweist, der geeignet ist, die hergestellte Paste (5) zu liefern, die zur Bildung von Elektroden (6) geeignet ist, und dadurch, dass diese geeignet ist, zwei Bindemittel mit verschiedenen Qualitäten zu lagern, jede jeweils in einer von zwei Vorrichtungen mit einem Lagerbehälter und einer Versorgungsschleife jeweils der ersten Mischerstufe (102a) und der zweiten Mischerstufe (102b), sowie mit einer Vorrichtung zur Dosierung jeder der beiden Qualitäten des bituminösen Bindemittels (3a, 3b), die jeweils die erste Mischerstufe (102a) und die zweite Mischerstufe (102b) versorgt.

6. Anlage nach Anspruch 5, **dadurch gekennzeichnet, dass** diese außerdem eine Vorrichtung (101a, 101b) zum getrennten Vorheizen der Fraktion von Granulaten (1a) und der Fraktion von Feinstoffen (1b) der trockenen granulären Mischung sowie getrennte Transportausrüstungen umfasst, von denen eine geeignet ist, die Versorgung der ersten Mischerstufe (102a) mit der Fraktion von Granulaten sicherzustellen, und die andere, die Versorgung der zweiten Mischerstufe (102b) mit der Fraktion von Feinstoffen sicherzustellen.

7. Anlage nach einem der Ansprüche 5 und 6, **dadurch gekennzeichnet, dass** diese außerdem mindestens eine Einheit zur fraktionierten Destillation umfasst, die geeignet ist, zwei bituminöse Bindemittel (3a, 3b) mit verschiedenen Qualitäten aus demselben Bindemittel mit einer Zwischenqualität zu erzeugen.

## Claims

1. Method for preparing a carbonaceous paste (5) for the manufacture of high-density electrodes (6), by mixing a solid and dry granular mixture (1a, 1b) and a liquid bituminous binder (3a, 3b), in a quantity required for the manufacture of the electrodes (6), the solid and dry granular mixture being a mixture of two fractions of constituents, one of which is a so-called coarse fraction (1a; 2a), including aggregates, and the other fraction is a fraction of submillimetre fines (1b, 2b), comprising at least two consecutive mixing steps, a first mixing step (102a), of which a so-called aggregate-preimpregnation step consists of mixing said coarse fraction (2a) of the granular mixture with a part (3a) of said bituminous binder, in a quantity at least sufficient for coating the aggregates and at least partially filling the open pore spaces of said aggregates, and is followed by a second mixing step (102b), called a covering step, which consists of mixing said preimpregnated coarse fraction (4a) of bituminous binder and originating from the first mixing step (102a), with the balance (3b) of said bituminous binder, required for the manufacture of the electrodes (6), and with said fraction of fines (2b) of said granular mixture, **characterized in that** the bituminous binder (3a) used in the first mixing step (102a) is of a grade different from that of the bituminous binder (3b) used in the second mixing step (102b), and **in that**, during the first mixing step (102a), a bituminous binder (3a) is used, with a lower softening point than the softening point of the bituminous binder (3b) used during the second mixing step (102b).

2. Method according to claim 1, **characterized in that**, in the second mixing step (102b), the introduction of the balance (3b) of the bituminous binder occurs simultaneously with or after the introduction of the preimpregnated coarse fraction (4a) originating from the first mixing step (102a), and **in that** the introduction of the fraction of fines (2b) occurs simultaneously with or after the introduction of the balance (3b) of the bituminous binder.

3. Method according to any one of claims 1 and 2, **characterized by** the fact that the fines (2b) of the dry granular mixture are premixed (105) with all or part of said balance (3b) of the bituminous binder, then the premixture (4b) thus obtained is introduced into the second mixing step (102b).

4. Method according to any one of claims 1 to 3, **characterized in that** the grades of the two bituminous binders (3a, 3b) with different softening points are obtained by fractional distillation operations then fluxing from a single grade of bituminous binder provided for preparing the paste (5).

5. Installation for the implementation of the method according to any one of claims 1 to 4, **characterized in that** it comprises two mixer stages, in continuous or discontinuous mode, the first mixer stage of which (102a), intended for the implementation of the first step of the method, has at least one inlet capable of receiving a solid and dry granular flow of aggregates (2a) and a flow of liquid bituminous binder (3a), as well as an outlet capable of providing a pasty mixture (4a) resulting from the first mixing step, and the second mixer stage of which (102b), intended for the implementation of the second, so-called covering mixing step, comprises an inlet capable of receiving said pasty mixture (4a) originating from the first mixer stage (102a), as well as at least one other inlet capable of receiving a solid and dry granular flow of fines (2b) and a make-up flow (3b) of bituminous binder, the second mixer stage (102b) also having an outlet capable of delivering the prepared paste (5), suitable for the forming of the electrodes (6), and **in that** it is capable of storing two binders of different grades each in one respectively of two devices with a storage tank and loop for supplying the first mixer stage (102a) and the second mixer stage (102b) respectively, as well as with a device for batching each of the two grades of bituminous binder (3a, 3b) supplying the first mixer stage (102a) and the second mixer stage(102b). respectively.

6. Installation according to claim 5, **characterized in that** it comprises, in addition, a device (101a, 101b) for the separate preheating of the fraction of aggregates (1a) and the fraction of fines (1b) of the dry granular mixture, as well as separate items of handling equipment, one is capable of ensuring the supply of the fraction of aggregates in the first mixer stage (102a) and another the supply of the fraction of fines in the second mixer stage (102b).

7. Installation according to any one of claims 5 and 6, **characterized in that** it comprises, in addition, at least one fractional distillation unit, capable of producing two bituminous binders (3a, 3b) of different grades from the same bituminous binder of intermediate grade.
